# EUROPÄISCHE PATENTSCHRIFT

(11) **EP 1 149 455 B1**
(45) Veröffentlichungstag und Bekanntmachung des Hinweises auf die Patenterteilung: **28.01.2004**
(21) Anmeldenummer: 99952340.0
(22) Anmeldetag: 09.08.1999
(51) Int. Cl.: H02J 7/00

(54) **VERFAHREN UND VORRICHTUNG ZUM LADEN VON AKKUMULATOREN**
METHOD AND DEVICE FOR CHARGING ACCUMULATORS
PROCEDE ET DISPOSITIF POUR CHARGER DES ACCUMULATEURS

(30) Priorität: 11.01.1999 DE 19900634
(43) Veröffentlichungstag der Anmeldung: 31.10.2001
(73) Patentinhaber: SIEMENS AKTIENGESELLSCHAFT, 80333 München (DE)
(72) Erfinder: HEBDING, Uwe, D-81249 München (DE); KOCH, Georg, D-85716 Unterschleissheim (DE)
(86) Internationale Anmeldenummer: PCT/DE1999/002485
(87) Internationale Veröffentlichungsnummer: WO 2000/042691

(56) Entgegenhaltungen:
- US-A- 4 885 522
- US-A- 5 296 797

## Beschreibung

Die vorliegende Erfindung betrifft ein Verfahren sowie eine entsprechende Vorrichtung zum Laden von Akkumulatoren.

Bei verschiedenen Akkumulatoren, wie z. B. bei Blei- oder Lithium-Ionen-Akkumulatoren, ist es notwendig, die Akkumulatoren mit einer strombegrenzten Spannungsquelle zu laden, bei der die Spannung sehr genau geregelt und unter Umständen zusätzlich abhängig von der Temperatur der Akkuzellen verändert werden muß, um temperaturbedingte Schwankungen während des Ladevorgangs auszugleichen. Die Spannungsquelle weist dabei eine Strombegrenzung auf, die den von der Spannungsquelle gelieferten Ladestrom begrenzt. Die Strombegrenzung wird dabei insbesondere dann wirksam, wenn ein leerer Akkumulator mit der Spannungsquelle verbunden wird.

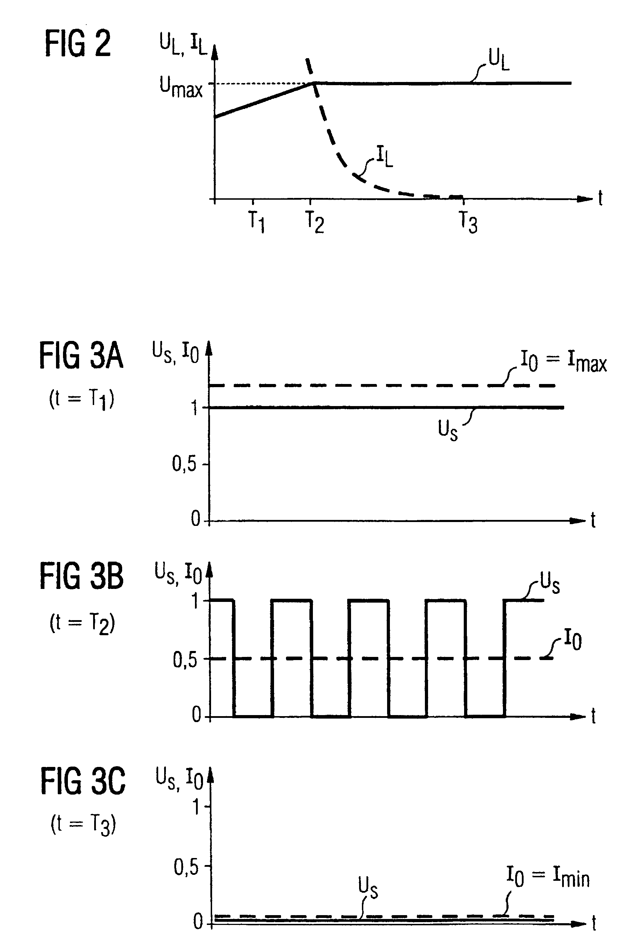

Ein herkömmliches Verfahren zum Laden von Akkumulatoren sowie die Wirkungsweise der Strombegrenzung ist in Fig. 2 dargestellt. Aus Fig. 2 ist ersichtlich, daß an den Akkumulator zunächst eine Ladespannung U_{L} angelegt wird, die niedriger als die maximal zulässige Ladespannung Uₘₐₓ ist. Mit Fortschreiten des Ladevorgangs wird die Ladespannung erhöht und steigt bis zu der eingestellten Reglerspannung Uₘₐₓ an. Anschließend wird die von der Spannungsquelle U_{L} durch die einsetzende Spannungsregelung auf diesen voreingestellten Wert Uₘₐₓ begrenzt. Die sich aufgrund des Ladevorgangs einstellende interne Akkumulatorspannung, d. h. die Leerlaufspannung des Akkumulators, steigt mit Fortschreiten des Ladevorgangs an. Dies bedeutet andererseits, daß aufgrund der nunmehr konstant gehaltenen Ladespannung U_{L} sowie des in erster Näherung konstant angenommenen Innenwiderstands des Akkumulators die Stromaufnahme bzw. der Ladestrom I_{L} des Akkumulators kontinuierlich ab dem Zeitpunkt T₂, zu dem die Spannungsbegrenzung einsetzt, sinkt. Somit kann aufgrund der Höhe des Ladestroms I_{L} auf den Ladezustand des Akkumulators geschlossen werden. Andererseits muß der Ladestrom I_{L} hinsichtlich eines Unterschreitens eines vorgegebenen unteren Grenzwerts überwacht werden, um in diesem Fall den Ladevorgang sofort oder nach einer bestimmten Zeit abzubrechen bzw. die Ladespannungsquelle auszuschalten.

Die Ladespannungsquelle kann als strombegrenzte hochgenaue Spannungsquelle (in Form eines Linear- oder Schaltreglers) realisiert sein, die in unmittelbarer Nähe des Akkumulators, d. h. sehr nahe an dem aufgeladenen Akkumulator, untergebracht wird oder über sogenannte Sense-Leitungen mit diesem zu verbinden ist. Diese Sense-Leitungen sind zusätzlich zu den stromführenden Leitungen, die zur Aufladung des Akkumulators dienen, vorgesehene Leitungen, welche nicht Strom führen und ausschließlich zur Überwachung des Ladezustands des Akkumulators vorgesehen sind. Diese Vorgehensweise besitzt jedoch den Nachteil, daß die Ladespannungsquelle trotz ihres Platzbedarfs und ihrer Verlustwärme nahe am aufzuladenden Akkumulator untergebracht werden muß oder durch die Verwendung der Sense-Leitungen der Verkabelungsaufwand sowie der Aufwand für Steckverbindungen vergrößert wird.

Zur Messung des Ladestroms kann bekannterweise ein Shunt-Widerstand in den Ladestromkreis eingefügt und die an diesem Widerstand abfallende Spannung gemessen werden. Die Verwendung eines derartigen Shunt-Widerstands hat wiederum den Nachteil zur Folge, daß ein zusätzlicher Spannungsabfall im Ladestromkreis hervorgerufen wird, so daß der Ladevorgang verlangsamt wird. Darüber hinaus stellt die Überwachung der an dem Shunt-Widerstand abfallenden Spannung einen nicht unerheblichen Aufwand für die Meßwerterfassung dar. Dies gilt insbesondere dann, wenn der Shunt-Widerstand nicht in die Masseleitung (z. B. wegen einer Masseverkopplung des Akkumulators über das zu betreibende Gerät), sondern in die Plusleitung eingefügt werden muß.

Zudem ergibt sich bei der zuvor beschriebenen herkömmlichen Vorgehensweise das Problem, daß unterschiedliche Akkumulatorentypen (z. B. NiCd/NiMH- und Li-Ionen-Akkumulatoren) wegen der unterschiedlich hohen Ladeendspannungen nicht gleichzeitig geladen werden können. NiCd/NiMH-Akkumulatoren werden in der Regel unabhängig von der Ladespannung mit Konstantstrom geladen.

Eine weitere bekannte Möglichkeit zum Laden von Akkumulatoren ist die Verwendung einer geregelten, d. h. veränderbaren Stromquelle, wobei der dem Akkumulator zugeführte Ladestrom durch das Anlegen eines Impulssignals an einen in einem stromführenden Leiter vorgesehenen Schalter durch Verändern des Tastverhältnisses des Impulssignals reguliert wird. Insbesondere wird die interne Akkumulatorspannung des Akkumulators überwacht und davon abhängig das Tastverhältnis, d. h. das Puls-Pausenverhältnis des Schalters und somit auch des Ladestroms reguliert. Ein Batterieladegerät dieser Art ist in US 4 885 522 beschrieben. Bei der dort beschriebenen Schaltung liegt im Ladestromkreis die Emmiter-Kollektorstrecke eines als Leitungsschalter dienenden Transistors und in Reihe dazu eine Induktanz. Die Basis dieses Schalttransistors ist mit dem Ausgang eines Schmitt-Triggers verbunden. Im Betrieb stellt diese Schaltung einen Oszillator dar, der mit dem Schalttransistor einen gepulsten Ladestrom erzeugt. Das Tastverhältnis des gepulsten Ladestromes wird durch die Hysterese des Schmitt-Triggers bestimmt, welche wiederum vom Schaltzustand eines mit der zu ladenden Batterie verbundenen Temperaturfilters bestimmt wird. Mit dieser Schaltung können hohe Schaltfreqenzen und damit eine Verringerung der Wärmeerzeugung im Schalttransistor erreicht werden. Mit diesem Konzept können zwar verschiedene Akkumulatortechnologien (z. B. NiMH- oder Li-Ionen-Akkumulatoren) ohne Mehraufwand aufgrund des veränderlichen Stromlimits in ein und demselben Gerät geladen werden. Im Umschaltzeitpunkt des Schalters treten jedoch Stromüberschwinger auf, die dazu führen können, daß der Akkumulator zu den Umschaltzeitpunkten mit einer kurzzeitigen Überspannung beaufschlagt wird, die aufgrund des regelmäßigen Pulsbetriebs auf Dauer zu einer Schädigung des Akkumulators führen würden. Für das Elektronikdesign der verwendeten Stromquelle sind somit erhöhte Aufwendungen erforderlich, um die zuvor beschriebenen Stromüberschwinger in den Umschaltzeitpunkten zu begrenzen, was jedoch mit erhöhten Kosten verbunden ist.

Der vorliegenden Erfindung liegt daher die Aufgabe zugrunde, ein Verfahren sowie eine entsprechende Vorrichtung zum Laden von Akkumulatoren bereitzustellen, wobei die oben beschriebenen Probleme beseitigt sind und Akkumulatoren mit geringem Aufwand zuverlässig geladen werden können. Insbesondere soll das Laden von Akkumulatoren unterschiedlicher Akkumulatortechnologien ohne zusätzlichen Schaltungsaufwand möglich sein.

Die oben beschriebene Aufgabe wird gemäß der vorliegenden Erfindung durch ein Verfahren zum Laden von Akkumulatoren mit den Merkmalen des Anspruches 1 bzw. eine Vorrichtung zum Laden von Akkumulatoren mit den Merkmalen des Anspruchs 15 gelöst. Die Unteransprüche beschreiben jeweils bevorzugte und vorteilhafte Ausführungsformen der vorliegenden Erfindung.

Erfindungsgemäß wird zwar analog zu der zuvor beschriebenen zweiten bekannten Lösung ebenfalls ein gepulstes Steuersignal mit einem bestimmten Tastverhältnis in Abhängigkeit von einem Betriebsparameter, z. B. dem augenblicklichen Ladezustand des aufzuladenden Akkumulators, erzeugt. Dieses gepulste Steuersignal wird jedoch im Gegensatz zu der zuvor beschriebenen Lösung nicht zum Pulsen des Ladestroms, sondern zur Einstellung des von einer regelbaren, d. h. veränderbaren Stromquelle gelieferten Nennstroms in Abhängigkeit von dem Tastverhältnis verwendet. Bei der erfindungsgemäßen Lösung wird somit dem Akkumulator kein gepulster Ladestrom zugeführt und es finden keine Umschaltvorgänge in den stromführenden Leitungen statt, so daß die mit der zuvor beschriebenen zweiten bekannten Lösung verbundene Probleme bei der vorliegenden Erfindung verhindert werden.

Darüber hinaus wird bei der vorliegenden Erfindung der Strom der Stromquelle nicht durch eine analoge Spannungsbegrenzung der Ladestromquelle eingestellt, sondern von der Ladesteuerung mit Hilfe des Tastverhältnisses des gepulsten Steuersignals vorgegeben. Im Gegensatz zu der zuvor beschriebenen bekannten "gepulsten" Lösung entspricht bei der vorliegenden Erfindung das Stromlimit der regelbaren Stromquelle dem mittleren Ladestrom.

Das gepulste Steuersignal kann, gegebenenfalls nachdem es auf eine Referenzspannung umgesetzt worden ist, über einen Tiefpaß oder dergleichen geführt werden, so daß eine analoge Spannung gewonnen wird, die dem gewünschten Ladestrom entspricht. Diese analoge Spannung gilt dann als Sollgröße für die Stromsteuerung bzw. Stromregelung der Stromquelle, um den von der Stromquelle gelieferten Nennstrom entsprechend einzustellen. Dabei ist jedem Tastverhältnis des gepulsten Steuersignals eindeutig ein entsprechender Stromwert des Nennstroms zugeordnet, d. h. über das Tastverhältnis des gepulsten Steuersignals ist die Höhe des eingeprägten Stroms der Stromquelle eindeutig definiert und somit der Ladesteuerung bekannt, ohne daß dieser unmittelbar gemessen werden muß. Dies vermindert zum einen den Schaltungsaufwand und vermeidet zum anderen einen Spannungsabfall an einem Shunt-Widerstand, der ansonsten zum Messen des Stroms im Ladestromkreis vorgesehen werden müßte (vergl. die zuvor beschriebene erste bekannte Lösung). Durch die Änderung des Stromlimits der Stromquelle wird vermieden, daß gegen Ende der Ladung an den Klemmen des Akkumulators gegebenenfalls eine durch dessen Innenwiderstand bedingte, unzulässig hohe Spannung auftritt.

Die vorliegende Erfindung hat den Vorteil, daß im Vergleich zu den oben beschriebenen bekannten Lösungen der Gesamtaufwand der Stromquelle und die damit verbundenen Kosten geringer sind.

Weitere Vorteile der vorliegenden Erfindung bestehen darin, daß keine genauen Spannungs-/Stromregler erforderlich sind und im Gerät keine Verlustleistung auftritt. Das Laden unterschiedlicher Akkumulatoren ist ohne zusätzlichen Hardware-Aufwand möglich. Eventuell bereits vorhandene Wandler bzw. Meßmöglichkeiten zur Ermittlung der Akkumulatorspannung können weiterhin verwendet werden. Bei Li-Ionen-Akkumulatoren ist bei Verwendung unterschiedlicher Ladeendspannungen kein hardwaremäßiger Mehraufwand erforderlich.

Die Erfindung wird nachfolgend anhand eines bevorzugten Ausführungsbeispiels unter Bezugnahme auf die beigefügte Zeichnung näher erläutert.
Fig. 1 zeigt ein schematisches Blockschaltbild eines bevorzugten Ausführungsbeispiels der vorliegenden Erfindung,
Fig. 2 zeigt eine Darstellung zur Verdeutlichung der Beziehung zwischen der Ladespannung und dem Ladestrom während des Ladens eines Akkumulators, und
Fig. 3A-3C zeigen Darstellungen zur Verdeutlichung der Einstellung des Nennstroms in Abhängigkeit von dem Tastverhältnis gemäß der vorliegenden Erfindung.

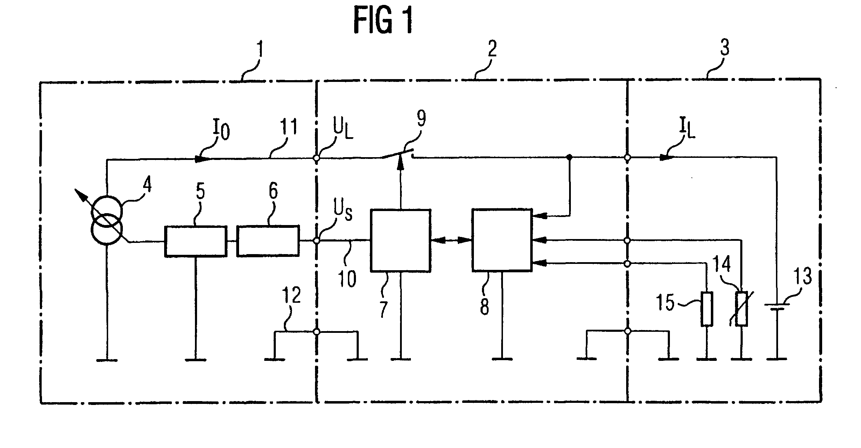

Fig. 1 zeigt ein vereinfachtes Blockschaltbild eines bevorzugten Ausführungsbeispiels einer Vorrichtung zum Laden von Akkumulatoren gemäß der vorliegenden Erfindung.

In Fig. 1 ist eine Ladestromquelleneinheit 1, ein an die Ladestromquelleneinheit 1 anzuschließendes Gerät 2 mit einer Ladesteuerung und ein aufzuladender Akkumulator 3 dargestellt.

Die Ladestromquelleneinheit 1 umfaßt eine regelbare, d. h. veränderbare Stromquelle 4, die einen Nennstrom I₀ bestimmter Größe liefert. Die Stromquelle 4 wird von einer Stromsteuereinheit 5 angesteuert, welche ihrerseits mit einer Pulserkennungseinheit 6 gekoppelt ist. Das Gerät 2 umfaßt eine Ladesteuerungseinheit 7, die beispielsweise in Form eines Microcontrollers realisiert sein kann, einen A/D-Wandler 8 und einen Ladehauptschalter 9, über den ein Ladevorgang gestartet bzw. unterbrochen werden kann. Der Akkumulator umfaßt Akkumulatorzellen 13, einen temperaturabhängigen Widerstand 14, der insbesondere in Form eines NTC-Widerstands realisiert ist, und einen Codierwiderstand 15 mit einem bestimmten festen und akkumulator-spezifischen Widerstandswert.

Aus Fig. 1 ist ersichtlich, daß neben zwei stromführenden Leitungen 11, 12 eine zusätzliche Signalleitung 10 vorgesehen ist, so daß die Ladestromquelleneinheit 1 über drei Leitungen 10-12 mit dem Gerät 2, welches beispielsweise ein Mobiltelefon sein kann, und damit auch mit dem Akkumulator 3 verbunden ist.

Der Ladevorgang läuft folgendermaßen ab:

Zu Beginn eines Ladevorgangs wird von der Ladesteuerungseinheit 7 der in dem stromführenden Leiter 11 angeordnete Hauptschalter 9 geschlossen, um somit den Ladestromkreis zu schließen. Anschließend wird von der Ladesteuerungseinheit 7 in regelmäßigen Abständen die augenblickliche Akkumulatorspannung des Akkumulators 13, d. h. die sich infolge des Ladevorgangs in dem Akkumulator 3 aufbauende Spannung, gemessen und über den A/D-Wandler 8 digital gemittelt. Die in Fig. 2 gezeigte Stromkennlinie der regelbaren Stromquelle 4 ist der Ladesteuerungseinheit 7 bekannt und somit in dem Gerät 2 gespeichert. Die Ladesteuerungseinheit 7 kann somit abhängig von der gemessenen Akkumulatorspannung des Akkumulators 3 ein Steuersignal für die regelbare Stromquelle 4 erzeugen, welches dafür sorgt, daß die jeweils angestrebte Ladespannung erreicht, aber nicht überschritten wird. Dies ist gemäß der vorliegenden Erfindung dadurch realisiert, daß die Ladesteuerungseinheit 7 ein gepulstes Steuersignal erzeugt, dessen Tastverhältnis, d. h. dessen Puls-Pausenverhältnis, abhängig von dem Ladezustand, d. h. abhängig von der Akkumulatorspannung des Akkumulators 3, eingestellt wird. Dieses gepulste Steuersignal wird über die in Fig. 1 gezeigte Signalleitung 10 der Pulserkennungseinheit 6 der Ladestromquelleneinheit 1 zugeführt. Das somit empfangene gepulste Steuersignal kann, gegebenenfalls nach seiner Umsetzung auf eine Referenzspannung, über einen (nicht gezeigten) Tiefpaß geführt werden, um ein analoges Steuersignal zu gewinnen, welches dem gewünschten Lade- bzw. Nennstrom entspricht. Dieses analoge Steuersignal wird der in Fig. 1 gezeigten Stromsteuereinheit 5 als Sollgröße für den von der Stromquelle 4 zu liefernden Netzstrom I₀ zugeführt, so daß die Stromquelle 4 von der Stromsteuereinheit 5 derart angesteuert wird, daß sie ein dem Tastverhältnis des gepulsten Steuersignals entsprechenden Nennstrom I₀ abgibt. Über das Tastverhältnis des gepulsten Steuersignals ist somit die Höhe des eingeprägten Stroms der Stromquelle 4 eindeutig definiert.

Bei der Einstellung des Tastverhältnisses kann die Ladesteuerungseinheit 7 neben der Akkumulatorspannung zudem oder alternativ weitere Betriebsparameter, wie insbesondere die Temperatur der Akkumulatorzellen 13, berücksichtigen. Zu diesem Zweck ist der bereits zuvor erwähnte temperaturabhängige Widerstand 14 vorgesehen, so daß die Ladesteuerungseinheit 7 durch Überwachung des Widerstandswerts des Widerstands 14 auf die Temperatur der Akkumulatorzellen 13 schließen kann, um über die Einstellung des Tastverhältnisses des der Pulserkennungseinheit 6 zugeführten gepulsten Steuersignals den von der Stromquelle 4 abgegebenen Nennstrom I₀ zu regeln. Die Ladesteuerungseinheit 7 kann darüber hinaus derart ausgestaltet sein, daß sie den Typ des aufzuladenden Akkumulators 3 vorzugsweise vor Beginn des Ladevorgangs ermittelt und bei der Einstellung des Tastverhältnisses des gepulsten Steuersignals entsprechend berücksichtigt. Zu diesem Zweck ist der ebenfalls bereits zuvor erwähnte Codierwiderstand 15 in dem Akkumulator 3 vorgesehen, dessen Widerstandswert eindeutig den Typ des Akkumulators 3 identifiziert. Durch Messen des Widerstandswerts dieses Codierwiderstands 15 kann somit die Ladesteuerungseinheit 7 vor Beginn des Ladevorgangs, d. h. vor Schließen des Hauptschalters 9, oder während des Ladevorgangs eindeutig den Typ des Akkumulators 3 feststellen und bei der Einstellung des Tastverhältnisses berücksichtigen. In diesem Fall sind in der Ladesteuerungseinheit 7 mehrere Werte für den maximalen Ladestrom und/oder die maximale Ladespannung gespeichert, die den unterschiedlichen Akkumulatortypen zugeordnet sind. Nach Feststellen des aufzuladenden Akkumulatortyps liest die Ladesteuerungseinheit 7 die dem festgestellten Akkumulatortyp entsprechenden Werte aus und stellt im folgenden das Tastverhältnis des gepulsten Steuersignals in Übereinstimmung mit diesen Werten ein, so daß sich im folgenden Ladevorgang die dem jeweiligen Akkumulatortyp entsprechende Stromkennlinie, wie z.B. die in Fig. 2 gezeigte Stromkennlinie, ergibt bzw. einstellt.

Beim Starten des Ladevorgangs stellt die Ladesteuerungseinheit 7 ein möglichst kleines Tastverhältnis ein, damit ein möglichst kleiner Ladestrom fließt. Im folgenden wird das Tastverhältnis des über die Signalleitung 10 der Pulserkennungseinheit 6 zugeführten gepulsten Steuersignals hochgeregelt bis der maximale Ladestrom bzw. die maximale Ladespannung erreicht wird. Der weitere Regelvorgang erfolgt dann anhand der maximalen Ladespannung. Sobald die angestrebte Ladespannung überschritten worden ist, wird von der Ladesteuerungseinheit 7 das Tastverhältnis verkleinert und somit der Ladestrom bzw. der Nennstrom I₀ verringert. Wird hingegen die angestrebte Spannung unterschritten, wird das Tastverhältnis vergrößert, um den dem Akkumulator 3 zugeführten Ladestrom zu erhöhen. Die Veränderungsschritte des Tastverhältnisses können dynamisch an die jeweilige Differenz zwischen der angestrebten Ladespannung und der augenblicklichen Akkumulatorspannung angepaßt werden. So kann bei großen Spannungsdifferenzen das Tastverhältnis durch die Ladesteuerungseinheit 7 in gröberen Schritten verändert werden, während bei kleineren Spannungsdifferenzen eine feinere Veränderung des Tastverhältnisses möglich ist.

Die Ladesteuerungseinheit 7 sowie die Stromsteuerungseinheit 5 sind derart ausgestaltet, daß ein Tastverhältnis des gepulsten Steuersignals von 100% einem maximalen Lade- bzw. Nennstrom I₀ der regelbaren Stromquelle 4 entspricht. Bei einem Tastverhältnis von 100 % weist das über die Signalleitung 10 der Pulserkennungseinheit 6 zugeführte gepulste Steuersignal dauerhaft einen High-Pegel auf. Dies ist schematisch in Fig. 3A dargestellt, wobei die Darstellung die in diesem Fall auftretende Beziehung zwischen dem Pegel des gepulsten Steuersignals U_{S}, welches an der Pulserkennungseinheit 6 anliegt, und dem von der regelbaren Stromquelle 4 gelieferten Nennstrom I₀ verdeutlicht. Aus Fig. 3A ist ersichtlich, daß der Pegel des gepulsten Steuersignals U_{S} dauerhaft auf dem High-Pegel liegt und dementsprechend die regelbare Stromquelle 4 von der Stromsteuereinheit 5 derart angesteuert wird, daß sie einen maximalen Nennstrom I₀= Iₘₐₓ abgibt. Der in Fig. 3A gezeigte Fall tritt beispielsweise zum Zeitpunkt T₂ in Fig. 2 auf.

Bei einem Tastverhältnis von 0% wird hingegen ein minimaler Nennstrom eingestellt. In diesem Fall weist das gepulste Steuersignal dauerhaft den Low-Pegel auf, und von der Stromsteuereinheit 5 wird die regelbare Stromquelle 4 derart angesteuert, daß von ihr ein minimaler Nennstrom I₀= Iₘᵢₙ abgegeben wird. Dieser Fall ist in Fig. 3C dargestellt und tritt beispielsweise in Fig. 2 zum Zeitpunkt T₃ auf.

Zwischen den in Fig. 3A und 3C dargestellten Grenzfällen wird durch entsprechende Einstellung des Tastverhältnisses des gepulsten Steuersignals ein Nennstrom I₀ der regelbaren Stromquelle 4 eingestellt, der zwischen den Grenzwerten Iₘᵢₙ und Iₘₐₓ liegt. Die Veränderung des Nennstroms I₀ kann beispielsweise linear abhängig von dem Tastverhältnis des gepulsten Steuersignals erfolgen, so daß beispielsweise bei dem in Fig. 3B gezeigten Fall eines Tastverhältnisses von 50% ein mittlerer Nennstrom I₀ von der Stromquelle 4 geliefert wird. Dieser Fall tritt beispielsweise in Fig. 2 zum Zeitpunkt T₂ auf.

Neben einer linearen Veränderung des Nennstroms I₀ der regelbaren Stromquelle 4 ist jedoch auch eine quadratische Veränderung des Nennstroms möglich. Selbstverständlich muß der Ladesteuerungseinheit 7 bekannt sein, ob der Nennstrom I₀ der regelbaren Stromquelle 4 linear oder quadratisch abhängig vom Tastverhältnis verändert werden soll. Darüber hinaus sind selbstverständlich auch umgekehrte Polaritäten zu den in den Fig. 3A - 3C dargestellten Fällen möglich.

Wie in Fig. 1 dargestellt ist, ist zwar zur Steuerung der Stromquelle 4 eine eigene Signalleitung 10 erforderlich, dennoch ist der Gesamtaufwand der Stromquelle und die damit verbundenen Kosten im Vergleich zu den bisher bekannten Lösungen niedriger.

Zudem kann die in Fig. 1 gezeigte Signalleitung 10 vorteilhaft verwendet werden, wenn die erfindungsgemäße Vorrichtung zum Betrieb mit verschiedenen Stromquellenarten, d. h. verschiedenen Netzteilen oder Autoladegeräten, eingesetzt werden soll. Dieser Fall kann beispielsweise auftreten, wenn mit günstigen Geräten aus Kostengründen als Standardnetzteil eine Stromquelle geringerer Leistung angeboten werden soll, während es als Zubehörteile leistungsfähigere Netzteile zu kaufen gibt. Bei den bisher bekannten Lösungen war in diesem Fall ein aufwendiges Vermessen des Ladestroms der jeweiligen Stromquelle notwendig, um die Stromquellen voneinander unterscheiden zu können. Die in Fig. 1 vorgesehene zusätzliche Signaleinheit 10 kann hingegen in diesem Fall dazu verwendet werden, um die jeweils verwendete Stromquelle zu identifizieren. Dabei wird davon ausgegangen, daß jeder Stromquellentyp durch eine eindeutige Eingangsimpendanz der jeweiligen Stromquelle charakterisiert ist. Die Ladesteuerungseinheit 7 kann daher vor Beginn des Ladevorgangs über die Signalleitung 10 die Eingangsimpendanz der angeschlossenen Stromquelle digital oder analog messen und somit auf den Typ der Stromquelle 4 schließen. Nach Erkennen des Typs der Stromquelle kann die Ladesteuerungseinheit 7 das Tastverhältnis des gepulsten Steuersignals, welches ebenfalls über die Signalleitung 10 der Pulserkennungseinheit 6 zugeführt wird, unter Berücksichtigung des festgestellten Typs der Stromquelle 4 einstellen.

## Patentansprüche

1. Verfahren zum Laden eines Akkumulators,
wobei der Akkumulator (3) mit Strom einer veränderbaren Stromquelle (4) aufgeladen wird, und
wobei mindestens ein Betriebsparameter des Akkumulators (3) erfaßt und davon abhängig ein gepulstes Steuersignal (U_{S}) mit einem bestimmten Tastverhältnis erzeugt wird,
**dadurch gekennzeichnet,**
**daß** der von der Stromquelle (4) gelieferte ungepulste Nennstrom (I₀) abhängig von dem Tastverhältnis des gepulsten Steuersignals (U_{S}) eingestellt wird.

2. Verfahren nach Anspruch 1,
**dadurch gekennzeichnet,**
**daß** als Betriebsparameter des Akkumulators (3) die sich infolge des Ladevorgangs einstellende Akkumulatorspannung erfaßt und davon abhängig das Tastverhältnis des gepulsten Steuersignals (U_{S}) eingestellt wird.

3. Verfahren nach Anspruch 1 oder 2,
**dadurch gekennzeichnet,**
**daß** der mindestens eine erfaßte Betriebsparameter des Akkumulators (3) vor seiner Auswertung digital gemittelt wird.

4. Verfahren nach einem der vorhergehenden Ansprüche,
**dadurch gekennzeichnet,**
**daß** das Tastverhältnis des gepulsten Steuersignals (U_{S)} abhängig von einer der Stromquelle eigenen Stromkennlinie eingestellt wird.

5. Verfahren nach Anspruch 4,
**dadurch gekennzeichnet,**
**daß** die Eingangsimpendanz der Stromquelle (4) vor dem Ladevorgang gemessen wird, um den Typ der Stromquelle (4) zu ermitteln und dem Ladevorgang die dem ermittelten Stromquellentyp entsprechende Stromkennlinie zugrunde zu legen.

6. Verfahren nach einem der vorhergehenden Ansprüche,
**dadurch gekennzeichnet,**
**daß** das Tastverhältnis des gepulsten Steuersignals (U_{S}) abhängig von dem Typ des aufzuladenden Akkumulators (3) eingestellt wird.

7. Verfahren nach einem der vorhergehenden Ansprüche,
**dadurch gekennzeichnet,**
**daß** als Betriebsparameter des Akkumulators (3) die Temperatur des Akkumulators (3) erfaßt und davon abhängig das Tastverhältnis des gepulsten Steuersignals (U_{S}) eingestellt wird.

8. Verfahren nach einem der vorhergehenden Ansprüche,
**dadurch gekennzeichnet,**
**daß** der mindestens eine Betriebsparameter des Akkumulators (3) in regelmäßigen Abständen gemessen wird.

9. Verfahren nach einem der vorhergehenden Ansprüche,
**dadurch gekennzeichnet,**
**daß** mit zunehmendem Tastverhältnis, welches zwischen der Impulsdauer und der Pausendauer des gepulsten Steuersignals (U_{S}) definiert ist, der Nennstrom (I₀) der Stromquelle (4) erhöht wird.

10. Verfahren nach Anspruch 2 und Anspruch 9,
**dadurch gekennzeichnet,**
**daß** das Tastverhältnis des gepulsten Steuersignals (U_{S}) derart eingestellt wird, daß das Tastverhältnis erhöht wird, falls die erfaßte Akkumulatorspannung des Akkumulators (3) kleiner als eine angestrebte Ladespannung ist, während das Tastverhältnis verringert wird, falls die erfaßte Akkumulatorspannung des Akkumulators größer als die angestrebte Ladespannung ist.

11. Verfahren nach Anspruch 10,
**dadurch gekennzeichnet,**
**daß** das Tastverhältnis variabel abhängig von der Differenz zwischen der erfaßten Akkumulatorspannung und der angestrebten Ladespannung verändert wird, wobei das Tastverhältnis mit zunehmender Differenz in gröberen Schritten verändert wird.

12. Verfahren nach einem der vorhergehenden Ansprüche,
**dadurch gekennzeichnet,**
**daß** zu Beginn eines Ladevorgangs das Tastverhältnis des gepulsten Steuersignals (U_{S}) auf seinen minimalen Wert eingestellt wird.

13. Verfahren nach einem der vorhergehenden Ansprüche,
**dadurch gekennzeichnet,**
**daß** jedem Tastverhältniswert des gepulsten Steuersignals (U_{S} eindeutig ein bestimmter Nennstromwert der Stromquelle (I₀) zugeordnet ist.

14. Verfahren nach Anspruch 13,
**dadurch gekennzeichnet,**
**daß** das Tastverhältnis des gepulsten Steuersignals (U_{S}) abhängig von dem mindestens einem erfaßten Betriebsparameter des Akkumulators (3) derart eingestellt wird, daß es eine quadratische Veränderung des Nennstroms (I₀) der Stromquelle (4) zur Folge hat.

15. Vorrichtung zum Laden eines Akkumulators,
mit einer veränderbaren Stromquelle (4) zur Bereitstellung eines Stroms, mit dem der Akkumulator (3) aufzuladen ist,
mit einer Erfassungseinrichtung (8, 14, 15) zum Erfassen mindestens eines Betriebsparameters des Akkumulators (3) und
mit Steuermitteln (7) zum Erzeugen eines gepulsten Steuersignals (U_{S}) mit einem bestimmten Tastverhältnis in Abhängigkeit von dem mindestens einen erfaßten Betriebsparameter des Akkumulators (3),
**gekennzeichnet durch**
Stromquellensteuerungsmittel (5, 6) zum Erfassen des Tastverhältnisses des gepulsten Steuersignals (U_{S}) der Steuermittel (7) und zum Erzeugen eines Stellsignals für die veränderbare Stromquelle (4) derart, daß der von der Stromquelle (4) gelieferte ungepulste Nennstrom (I₀) abhängig von dem Tastverhältnis des gepulsten Steuersignals (U_{S}) eingestellt wird.

16. Vorrichtung nach Anspruch 15,
**dadurch gekennzeichnet,**
**daß** die Erfassungseinrichtung (8, 14, 15) als Betriebsparameter des Akkumulators (3) die sich infolge eines Ladevorgangs einstellende Akkumulatorspannung des Akkumulators (3) erfaßt.

17. Vorrichtung nach Anspruch 15 oder 16,
**dadurch gekennzeichnet,**
**daß** zwischen der Erfassungseinrichtung (14, 15) und den Steuermitteln (7) ein Analog/Digital-Wandler (8) geschaltet ist.

18. Vorrichtung nach einem der Ansprüche 15 - 17,
**dadurch gekennzeichnet,**
**daß** die Steuermittel (7) derart ausgestaltet sind, daß sie das Tastverhältnis des gepulsten Steuersignals (U_{S}) in Übereinstimmung mit einer der veränderbaren Stromquelle (4) eigenen Stromkennlinie einstellen.

19. Vorrichtung nach Anspruch 18,
**dadurch gekennzeichnet,**
**daß** die Steuermittel (7) einen Stromkennlinienspeicher zum Speichern von Stromkennlinien verschiedener Stromquellentypen umfassen, und
**daß** die Steuermittel (7) derart ausgestaltet sind, daß sie vor einem Ladevorgang die Eingangsimpendanz der Stromquelle messen und davon abhängig auf den Typ der Stromquelle (4) schließen, um für den nachfolgenden Ladevorgang die dem erfaßten Stromquellentyp entsprechende Stromkennlinie zugrunde zu legen.

20. Vorrichtung nach Anspruch 19,
**dadurch gekennzeichnet,**
**daß** die Steuermittel (7) die Eingangsimpendanz der angeschlossenen Stromquelle (4) über dieselbe Steuerleitung (10) messen, über die auch das gepulste Steuersignal (U_{S}) den Stromquellensteuerungsmittel (5, 6) zugeführt wird.

21. Vorrichtung nach einem der Ansprüche 15 - 20,
**dadurch gekennzeichnet,**
**daß** die Erfassungseinrichtung Temperaturerfassungsmittel (14) zum Erfassen der Temperatur des Akkumulators (3) als einen Betriebsparameter des Akkumulators (3) umfassen und
**daß** die Steuermittel (7) derart ausgestaltet sind, daß sie das Tastverhältnis des gepulsten Steuersignals (U_{S}) unter Berücksichtigung der erfaßten Temperatur des Akkumulators (3) einstellen.

22. Vorrichtung nach einem der Ansprüche 15 - 21,
**dadurch gekennzeichnet,**
**daß** die Erfassungseinrichtung Akkumulatortyp-Erkennungsmittel (15) zum Erkennen des Typs des aufzuladenden Akkumulators (3) umfassen, und
**daß** die Steuermittel derart ausgestaltet sind, daß sie das Tastverhältnis des gepulsten Steuersignals (U_{S}) unter Berücksichtigung des erkannten Typs des aufzuladenden Akkumulators (3) einstellen.

23. Vorrichtung nach einem der Ansprüche 15 - 22,
**dadurch gekennzeichnet,**
**daß** jedem Tastverhältniswert des gepulsten Steuersignals (U_{S}) eindeutig ein entsprechender Wert für den Nennstrom (I₀) der Stromquelle (4) zugeordnet ist.

24. Vorrichtung nach einem der Ansprüche 15 - 23,
**dadurch gekennzeichnet,**
**daß** die Steuermittel (7) in einem mit dem Akkumulator (3) zu betreibenden Gerät (2) untergebracht sind.

25. Vorrichtung nach Anspruch 24,
**dadurch gekennzeichnet,**
**daß** das Gerät (2) ein Mobiltelefon ist.

26. Vorrichtung nach einem der Ansprüche 15 - 25,
**dadurch gekennzeichnet,**
**daß** die Steuermittel (7) einen Microcontroller umfassen.

## Claims

1. Method for charging a rechargeable battery,
with the rechargeable battery (3) being charged with current from a variable current source (4), and
with at least one operating parameter of the rechargeable battery (3) being detected, and a pulsed control signal (U_{S}) with a specific duty ratio being produced as a function of this,
**characterized**
**in that** the unpulsed rated current (I₀) supplied from the current source (4) is adjusted as a function of the duty ratio of the pulsed control signal (U_{S}).

2. Method according to Claim 1,
**characterized**
**in that** the rechargeable battery voltage which is produced as a consequence of the charging process is detected as an operating parameter of the rechargeable battery (3), and the duty ratio of the pulsed control signal (U_{S}) is adjusted as a function of this.

3. Method according to Claim 1 or 2,
**characterized**
**in that** the at least one detected operating parameter of the rechargeable battery (3) is averaged digitally before its evaluation.

4. Method according to one of the preceding claims,
**characterized**
**in that** the duty ratio of the pulsed control signal (U_{S}) is adjusted as a function of a current characteristic which is specific to the current source.

5. Method according to Claim 4,
**characterized**
**in that** the input impedance of the current source (4) is measured before the charging process, in order to determine the type of current source (4) and to base the charging process on the current characteristic, which corresponds to the determined current source type.

6. Method according to one of the preceding claims,
**characterized**
**in that** the duty ratio of the pulsed control signal (U_{S}) is adjusted as a function of the type of rechargeable battery (3) to be charged.

7. Method according to one of the preceding claims,
**characterized**
**in that** the temperature of the rechargeable battery (3) is detected as an operating parameter of the rechargeable battery (3), and the duty ratio of the pulsed control signal (U_{S}) is adjusted as a function of this.

8. Method according to one of the preceding claims,
**characterized**
**in that** the at least one operating parameter of the rechargeable battery (3) is measured at regular intervals.

9. Method according to one of the preceding claims,
**characterized**
**in that** the rated current (I₀) of the current source (4) is increased as the duty ratio, which is defined between the pulse duration and the pause duration of the pulsed control signal (U_{S}), increases.

10. Method as claimed in Claim 2 and Claim 9,
**characterized**
**in that** the duty ratio of the pulsed control signal (U_{S}) is adjusted in such a manner that the duty ratio is increased if the detected rechargeable battery voltage of the rechargeable battery (3) is less than a desired charging voltage, while the duty ratio is reduced if the detected rechargeable battery voltage of the rechargeable battery is greater than the desired charging voltage.

11. Method according to Claim 10,
**characterized**
**in that** the duty ratio is varied as a function of the difference between the detected rechargeable battery voltage and the desired charging voltage, with the duty ratio being varied in coarser steps as the difference increases.

12. Method according to one of the preceding claims,
**characterized**
**in that**, at the start of a charging process, the duty ratio of the pulsed control signal (U_{S}) is set to its minimum value.

13. Method according to one of the preceding claims,
**characterized**
**in that** each duty ratio value of the pulsed control signal (U_{S}) is uniquely associated with a specific rated current value of the current source (I₀).

14. Method according to Claim 13, **characterized**
**in that** the duty ratio of the pulsed control signal (U_{S}) is adjusted as a function of the at least one detected operating parameter of the rechargeable battery (3) in such a manner that this results in the rated current (I₀) of the current source (4) being varied in accordance with a square law.

15. Apparatus for charging a rechargeable battery, having a variable current source (4) for providing a current with which the rechargeable battery (3) can be charged,
having a detection device (8, 14, 15) for detecting at least one operating parameter of the rechargeable battery (3), and
having control means (7) for producing a pulsed control signal (U_{S}) with a specific duty ratio as a function of the at least one detected operating parameter of the rechargeable battery (3),
**characterized**
**by** current source control means (5, 6) for detecting the duty ratio of the pulsed control signal (U_{S}) from the control means (7) and for producing an adjustment signal for the variable current source (4), in such a manner that the unpulsed rated current (I₀) supplied from the current source (4) is adjusted as a function of the duty ratio of the pulsed control signal (U_{S}).

16. Apparatus according to Claim 15,
**characterized**
**in that** the detection device (8, 14, 15) detects, as an operating parameter of the rechargeable battery (3), the rechargeable battery voltage of the rechargeable battery (3) which is produced as a consequence of a charging process.

17. Apparatus according to Claim 15 or 16,
**characterized**
**in that** an analogue/digital converter (8) is connected between the detection device (14, 15) and the control means (7).

18. Apparatus according to one of Claims 15 - 17,
**characterized**
**in that** the control means (7) are designed in such a manner that they adjust the duty ratio of the pulsed control signal (U_{S}) to match a current characteristic which is specific to the variable current source (4).

19. Apparatus according to Claim 18,
**characterized**
**in that** the control means (7) have a current characteristic memory for storing current characteristics for various current source types, and
**in that** the control means (7) are designed in such a manner that they measure the input impedance of the current source before a charging process and deduce the type of current source (4) as a function of this measurement, in order to use the current characteristic which corresponds to the detected current source type as the basis for the subsequent charging process.

20. Apparatus according to Claim 19,
**characterized**
**in that** the control means (7) measure the input impedance of the connected current source (4) via the same control line (10) via which the pulsed control signal (U_{S}) is also supplied to the current source control means (5, 6).

21. Apparatus according to one of Claims 15 - 20,
**characterized**
**in that** the detection device has temperature detection means (14) for detecting the temperature of the rechargeable battery (3) as an operating parameter of the rechargeable battery (3), and
**in that** the control means (7) are designed in such a manner that they adjust the duty ratio of the pulsed control signal (U_{S}) taking account of the detected temperature of the rechargeable battery (3).

22. Apparatus according to one of Claims 15 - 21,
**characterized**
**in that** the detection device has rechargeable battery type identification means (15) for identifying the type of rechargeable battery (3) to be charged, and
**in that** the control means are designed in such a manner that they adjust the duty ratio of the pulsed control signal (U_{S}) taking account of the identified type of rechargeable battery to be charged.

23. Apparatus according to one of Claims 15 - 22,
**characterized in that** each duty ratio value of the pulsed control signal (U_{S}) has a uniquely associated corresponding value for the rated current (I₀) of the current source (4).

24. Apparatus according to one of Claims 15 - 23,
**characterized in that** the control means (7) are accommodated in an appliance (2) which can be operated with the rechargeable battery (3).

25. Apparatus according to Claim 24,
**characterized**
**in that** the appliance (2) is a mobile telephone.

26. Apparatus according to one of Claims 15 - 25,
**characterized**
**in that** the control means (7) have a microcontroller.

## Revendications

1. Procédé pour charger un accumulateur, l'accumulateur (3) étant chargé avec le courant d'une source de courant (4) modifiable et au moins un paramètre de fonctionnement de l'accumulateur (3) étant saisi et un signal de commande pulsé (U_{S}) étant produit, en fonction de celui-ci, avec un rapport d'impulsions déterminé, **caractérisé en ce que** le courant nominal (I₀) non pulsé livré par la source de courant (4) est réglé en fonction du rapport d'impulsions du signal de commande pulsé (U_{S}).

2. Procédé selon la revendication 1, **caractérisé en ce qu'**on saisit, en tant que paramètre de fonctionnement de l'accumulateur (3), la tension de l'accumulateur qui s'installe suite au processus de charge et on règle en fonction de celle-ci le rapport d'impulsions du signal de commande pulsé (Us).

3. Procédé selon la revendication 1 ou 2, **caractérisé en ce qu'**on calcule la moyenne numérique de l'au moins un paramètre de fonctionnement saisi de l'accumulateur (3) avant son analyse.

4. Procédé selon l'une des revendications précédentes, **caractérisé en ce que** le rapport d'impulsions du signal de commande pulsé (U_{S}) est réglé en fonction d'une courbe caractéristique de courant spécifique de la source de courant.

5. Procédé selon la revendication 4, **caractérisé en ce que** l'impédance d'entrée de la source de courant (4) est mesurée avant le processus de charge afin de déterminer le type de la source de courant (4) et de prendre pour base du processus de charge la courbe caractéristique de courant correspondant au type de source de courant déterminé.

6. Procédé selon l'une quelconque des revendications précédentes, **caractérisé en ce que** le rapport d'impulsions du signal de commande pulsé (U_{S}) est réglé en fonction du type de l'accumulateur (3) à charger.

7. Procédé selon l'une quelconque des revendications précédentes, **caractérisé en ce qu'**on saisit, en tant que paramètre de fonctionnement de l'accumulateur (3), la température de l'accumulateur (3) et on règle le rapport d'impulsions du signal de commande pulsé (U_{S}) en fonction de celle-ci.

8. Procédé selon l'une quelconque des revendications précédentes, **caractérisé en ce que** l'au moins un paramètre de fonctionnement de l'accumulateur (3) est mesuré à intervalles réguliers.

9. Procédé selon l'une quelconque des revendications précédentes, **caractérisé en ce que** le courant nominal (I₀) de la source de courant (4) augmente à mesure que le rapport d'impulsions, qui est défini entre la durée des impulsions et la durée des pauses du signal de commande pulsé (U_{S}), augmente.

10. Procédé selon la revendication 2 et la revendication 9, **caractérisé en ce que** le rapport d'impulsions du signal de commande pulsé (U_{S}) est réglé de manière à augmenter dans le cas où la tension d'accumulateur saisie de l'accumulateur (3) est inférieure à une tension de charge voulue, tandis que ce rapport d'impulsions diminue dans le cas où la tension d'accumulateur saisie de l'accumulateur est supérieure à la tension de charge voulue.

11. Procédé selon la revendication 10, **caractérisé en ce que** le rapport d'impulsions subit des modifications variables en fonction de la différence entre la tension d'accumulateur saisie et la tension de charge voulue, le rapport d'impulsions étant modifié par étapes plus approximatives à mesure que la différence augmente.

12. Procédé selon l'une quelconque des revendications précédentes, **caractérisé en ce que**, au début d'un processus de charge, le rapport d'impulsions du signal de commande pulsé (U_{S}) est réglé sur sa valeur minimale.

13. Procédé selon l'une quelconque des revendications précédentes, **caractérisé en ce qu'**une valeur déterminée du courant nominal de la source de courant (I₀) est associée de manière univoque à chaque valeur du rapport d'impulsions du signal de commande pulsé (U_{S}).

14. Procédé selon la revendication 13, **caractérisé en ce que** le rapport d'impulsions du signal de commande pulsé (U_{S}) est réglé en fonction de l'au moins un paramètre de fonctionnement saisi de l'accumulateur (3), de manière à avoir pour résultat une modification quadratique du courant nominal (I₀) de la source de courant (4).

15. Dispositif pour charger un accumulateur, comprenant une source de courant (4) modifiable pour la mise à disposition d'un courant avec lequel l'accumulateur (3) doit être chargé, un dispositif de saisie (8, 14, 15) pour saisir au moins un paramètre de fonctionnement de l'accumulateur (3) et des moyens de commande (7) pour produire un signal de commande pulsé (U_{S}) ayant un rapport d'impulsions déterminé en fonction de l'au moins un paramètre de fonctionnement saisi de l'accumulateur (3), **caractérisé par** des moyens de commande de source de courant (5, 6) pour saisir le rapport d'impulsions du signal de commande pulsé (U_{S}) des moyens de commande (7) et pour produire un signal de réglage pour la source de courant (4) modifiable, de manière à ce que le courant nominal (I₀) non pulsé livré par la source de courant (4) soit réglé en fonction du rapport d'impulsions du signal de commande pulsé (U_{S}).

16. Dispositif selon la revendication 15, **caractérisé en ce que** le dispositif de saisie (8, 14, 15) saisit, en tant que paramètre de fonctionnement de l'accumulateur (3), la tension d'accumulateur de l'accumulateur (3) qui s'établit suite à un processus de charge.

17. Dispositif selon la revendication 15 ou 16, **caractérisé en ce qu'**un convertisseur analogique/numérique (8) est monté entre le dispositif de saisie (14, 15) et les moyens de commande (7).

18. Dispositif selon l'une des revendications 15-17, **caractérisé en ce que** les moyens de commande (7) sont exécutés de manière à régler le rapport d'impulsions du signal de commande pulsé (U_{S}) en accord avec une courbe caractéristique de courant spécifique de la source de courant (4) modifiable.

19. Dispositif selon la revendication 18, **caractérisé en ce que** les moyens de commande (7) comprennent une mémoire des courbes caractéristiques de courant servant à mémoriser les courbes caractéristiques de courant de différents types de sources de courant et **en ce que** les moyens de commande (7) sont exécutés de manière à mesurer l'impédance d'entrée de la source de courant avant un processus de charge et à déduire le type de la source de courant (4) en fonction de celle-ci afin de prendre pour base du processus de charge qui suit la courbe caractéristique de courant correspondant au type de source de courant saisi.

20. Dispositif selon la revendication 19, **caractérisé en ce que** les moyens de commande (7) mesurent l'impédance d'entrée de la source de courant (4) connectée par le biais de la même ligne de commande (10) par laquelle le signal de commande pulsé (U_{S}) est également amené aux moyens de commande de source de courant (5, 6).

21. Dispositif selon l'une des revendications 15-20, **caractérisé en ce que** le dispositif de saisie comprend des moyens de saisie de la température (14) servant à saisir la température de l'accumulateur (3) en tant que paramètre de fonctionnement de l'accumulateur (3) et **en ce que** les moyens de commande (7) sont exécutés de manière à régler le rapport d'impulsions du signal de commande pulsé (Us) en tenant compte de la température saisie de l'accumulateur (3).

22. Dispositif selon l'une des revendications 15-21, **caractérisé en ce que** le dispositif de saisie comprend un moyen de reconnaissance du type d'accumulateur (15) servant à reconnaître le type de l'accumulateur (3) à charger et **en ce que** les moyens de commande sont exécutés de manière à régler le rapport d'impulsions du signal de commande pulsé (U_{S}) en tenant compte du type reconnu de l'accumulateur (3) à charger.

23. Dispositif selon l'une des revendications 15-22, **caractérisé en ce qu'**à chaque valeur du rapport d'impulsions du signal de commande pulsé (U_{S}) est associée, de manière univoque, une valeur correspondante pour le courant nominal (I₀) de la source de courant (4).

24. Dispositif selon l'une des revendications 15-23, **caractérisé en ce que** les moyens de commande (7) sont installés dans un appareil (2) devant fonctionner avec l'accumulateur (3).

25. Dispositif selon la revendication 24, **caractérisé en ce que** l'appareil (2) est un téléphone mobile.

26. Dispositif selon l'une des revendications 15-25, **caractérisé en ce que** les moyens de commande (7) comprennent un microcontrôleur.
